# EUROPEAN PATENT APPLICATION

(11) **EP 2 017 606 A1**
(43) Date of publication of application: **21.01.2009**
(21) Application number: 07013874.8
(22) Date of filing: 16.07.2007
(51) Int. Cl.: G01N 23/20, G01N 35/00

(54) **Method and gripping device for automatically transferring a sample container from a storing location to an analysis location, and use of said device**

(71) Applicant: COMMISSARIAT A L'ENERGIE ATOMIQUE, 75015 Paris (FR)
(72) Inventor: Ferrer, Jean Luc, 38700 Corenc (FR); Jacquamet, Lilian, 38620 Montferrat (FR); Bertoni, Alain, 38140 Beaucroissant (FR)
(74) Representative: Bolinches, Michel Jean-Marie

(57) **Abstract**

The present invention relates to a method and gripping device for automatically transferring from a storing location to an analysis location a sample container having first and second opposite ends and containing the sample adjacent said second end, and to a use of such a gripping device for submitting this sample to X-ray beams in a diffractometer.

The method of the invention comprises gripping in said storing location the container (2) at said first end (3) thereof, the container then occupying a storing position, and bringing the container to a substantially flipped over position for subsequently positioning the container onto said analysis location, and this method comprises reversibly overturning the container while continuously gripping said first end during its transfer, and *vice versa.*

The gripping device of the invention comprises two longitudinal gripping heads (20) ending with jaws (11, 21), one of which is a rotary driving jaw (21) for the container under the control of control means (23) accommodated inside the corresponding driving gripping head (20).

## Description

The present invention relates to a method and gripping device for automatically transferring from a storing location to an analysis location at least one sample container, such as a vial for a crystal to be cryogenically transferred for analysis by X-rays, and also to a use of such a gripping device for submitting this crystal, such as a protein, to X-ray beams in a diffractometer for X-ray crystallography measurements.

Solving the structure of biological macromolecules has become an important phase in the understanding of biological mechanisms at the molecular level. This structural information can be used to manipulate proteins for industrial applications, such as catalysis, and is also often used as the first step towards the design of active molecules that will give birth to new medications (as an example, mention can be made of inhibitors of the HIV enzymes).

Among the different techniques available, X-ray crystallography is a widely used technique for providing a three-dimensional representation of macromolecules. An X-ray crystallography experiment generally consists in placing the macromolecule to be studied - usually a protein - in an intense X-ray beam, thus producing an image of the diffracted X-rays, the intensity thereof being then recorded by the means of a specific detector. From these data, the 3-D distribution of the electronic density of the studied macromolecule can be obtained, from which the 3-D structure of the studied molecule may be built.

Most currently used sample containers for macromolecule crystals include a sample that is mounted on a magnetic holder inside a vial. Such containers each comprise a metallic base or cap, in which a pin is inserted. A loop, which is glued at the tip of this pin, supports the crystal sample, whose size is largely less than 1 mm and typically of about 50 µm to 300 µm. During transportation, the vial is thus closed by the cap of the magnetic holder. This way, the sample is stored in the liquid nitrogen contained in the vial.

At the beginning of the crystallography experiment, this device is placed in a dedicated vessel full of liquid nitrogen, typically a Dewar vessel, either with its vial (see Ohana et al., 2004; Cipriani et al., 2006) or without it (see Abola et al, 2000; Sharff, 2003), waiting to be taken by an automated gripping system to be transferred in view of the X-ray analysis. Specifically, due to the intensity of the used X-ray beams, it is usually necessary to maintain the sample at a temperature close to that of liquid nitrogen. Thus, the crystal is to be maintained in the Dewar vessel a short time after being obtained, and then maintained under these conditions during its transfer from the Dewar vessel to the diffractometer. Throughout data recording in a diffractometer on which the sample is placed, this sample is constantly bathed in a flow of gaseous nitrogen at a temperature of about 100 K. During this transfer, the crystal must never be exposed to the ambient atmosphere, and must always be maintained at a temperature of no more than 130 K. This transfer operation, when realized manually, is a very slow and delicate step of the process.

As a consequence, fully automated gripping and transfer systems have been developed in the past, which had to prove, apart from a reduced time of transfer for the sample container, a very high degree of reliability before being accepted by the research community. Indeed, a sample sometimes takes months to be produced, and the risk of spoiling it is generally considered to be too high to try anything else but what is already known as working with a reasonable rate of failure.

The first difficulty to cope with when transferring the sample from the Dewar vessel to the diffractometer is to keep it intact, by making sure that, throughout this operation, the sample is never in contact with humid air, and remains at a temperature of about 100 K. Automatic transfer systems were thus developed in order to meet these conditions with a better reliability than a manual transfer, and with a much lower cycle time.

There are at present two main groups of automatic transfer devices for transferring macromolecules crystal vials from a Dewar vessel to a diffractometer, where:
- the devices according to the first group require the sample holder to be oriented so that the sample faces the sample changer or gripping heads of the transfer device, i.e. in such a manner that said cap of the vial is down while the sample is up (see in particular documents US-B-6,404,849 and US-B-6,608,883); and
- the devices according to the second group conversely require the sample holder to be oriented so that the cap faces the sample changer, i.e. in such a manner that said cap is up while the sample is down.

In this second configuration, which includes all systems meeting the European standard "SPINE", the sample changer must flip over the vial or, alternatively, a secondary mechanism must present the vial to the transfer device in such a way that the cap of the vial arrives with the right orientation onto the diffractometer. One may cite for example the following three transfer devices which all belong to that second group:
- the sample changer developed at Stanford (USA) known as the "Cryo-tong" system, which takes out the cap from its storage using a magnetic tool, puts the cap on a holder and then takes it back with tongs (see Abola et al., 2000),
- the first version of the CATS system (developed in France, see Ohana et al., 2004), which takes the cap + vial ensemble by gripping the top end thereof corresponding to the cap, which then puts it on a holder and takes it back at the bottom end of the system, and
- a system developed by the European Molecular Biology Laboratory (EMBL, Grenoble), which consists in providing a mechanism inside the Dewar vessel that enables the sample vial to be positioned on its side, thus avoiding the necessity to flip it over.

As a consequence, a major drawback of all the systems which have to flip over the sample container is that these systems must:
- either incorporate an additional system to do this flipping over, which makes the transfer cycle time longer and increases the risk of incidents during the mounting/ dismounting operations, or
- use devices that manipulate the sample container inside the Dewar vessel, which involves all sorts of technical problems due to the mechanical operations performed in liquid nitrogen.

One purpose of the present invention is to provide a method for automatically transferring from a storing location (typically a Dewar vessel) to an analysis location (typically a X-ray diffractometer) a sample container, such as a vial for a crystal to be cryogenically transferred for analysis by X-rays, the container having first and second opposite ends and containing the sample adjacent said second end, the method comprising:
- gripping in said storing location the container at said first end thereof, the container then occupying a storing position, and
- bringing the container to a substantially flipped over position compared to said initial position which is suitable for subsequently positioning the container onto said analysis location,
this method overcoming the above-mentioned drawbacks while significantly reducing the time of transfer for the sample container and implying an improved reliability compared to the known methods.

For this purpose, the method according to the invention comprises reversibly overturning the container while continuously gripping said first end thereof during its transfer between said storing and flipped over positions, and *vice versa.*

It will be noted that this method of the invention advantageously uses the time spent for transferring the sample container for carrying out this flipping over of the latter, which significantly reduces the global cycle time from the Dewar vessel to the diffractometer, and *vice versa.*

As an example, this inventive method provides a time of transfer for each sample container from the Dewar vessel to the diffractometer which may be of only 5 seconds (i.e. a global cycle time including the return transfer of only 10 seconds), which is much lower than the global cycle time of about 30 seconds which was obtained thanks to the above-mentioned CATS device which was disclosed in page 75 of Ohana et al., 2004.

It will also be noted that this flipping over of the sample container is meant to prepare the appropriate presentation of the latter - typically along a horizontal direction - onto the diffractometer.

According to another feature of the present invention, the container is overturned by both clamping and turning forces which are exerted at said very first end.

According to still another feature of the present invention, the container may describe a plurality of discrete angular positions during its overturning about said first end, with an angle of substantially 180° between said storing and flipped over positions. In other words, the container may thus have a flipping over movement divided in a plurality of angular steps, as obtained by a gear transmission.

According to a preferred embodiment of the present invention, the container is a vial having a longitudinal median plane, and the inventive method comprises keeping said plane parallel to itself from said storing position to said flipped over position, said first and second ends respectively being top and bottom ends of the container in said storing position.

Advantageously, the method of the invention may comprise automatically and continuously counterbalancing said overturning of the container, so that said longitudinal median plane of the latter remains substantially vertical from said storing position to said flipped over position.

According to a still preferred embodiment of the present invention, the container is preferably of magnetic holder type, containing liquid nitrogen and comprising at said first end a metallic cap in which a longitudinal pin is inserted, said pin having a tip to which a loop supporting said sample is adhered adjacent said second end, and the container is gripped immediately below said cap from said storing position to said flipped over position.

It should be noted that the above-mentioned clamping and turning forces which are exerted at said first end of the sample vial are in fact exerted immediately below said cap.

Also preferably, said storing location may be a Dewar vessel containing liquid nitrogen, and said analysis location may be a diffractometer with a sample location therein which is bathed in a flow of nitrogen gas at a temperature of about 100 K.

Advantageously, said sample may be a macromolecule crystal, such as a protein crystal, which is transferred at a temperature less than or equal to 130 K, and preferably below 100 K.

According to a further aspect of the present invention, there is provided a gripping and transferring device for implementing the above-described inventive method, the device comprising a robotic end-effector having two longitudinal and substantially parallel gripping heads ending with two respective gripping jaws, which are designed to grip said first end of the container with a clamping force along a transverse axis substantially perpendicular to said gripping heads, which also allows to overcome the aforementioned drawbacks.

For this purpose, one of said gripping jaws of this gripping device is a rotationally driving jaw for the container and is rotatably mounted about said axis under the control of control means, which are accommodated inside the corresponding driving gripping head and which are arranged to reversibly bring said driving jaw into a plurality of angular positions during its rotation, the other gripping jaw being an idler jaw (i.e. free jaw) which is provided with stabilization means for maintaining this idler jaw at predetermined angular positions when not gripping the container.

It will be noted that this inventive gripping and transferring device thus performs simultaneously, on the one hand, the function of reversible displacement of the container from one location (i.e. for storing or analysis) to the other one (i.e. for analysis or storing, respectively) and, on the other hand, the function of flipping over this container thanks to the driving gripping head provided with the rotating driving jaw.

According to another preferred feature of the present invention, said control means may advantageously comprise a gear transmission which is driven by a motor equipped with a reductor, via a reciprocating longitudinal driving shaft extending inside and along said driving gripping head, so as to bring said driving jaw into discrete angular positions thanks to this gear transmission.

Alternatively, one may note that said control means could be of the type comprising a rotating shaft coupled to a transmission belt, instead of using such a gear transmission.

Advantageously, said motor is an electric motor which is preferably fed with continuous current, thus giving the most satisfactory results in terms of reproducibility. Specifically, it will be noted that a pneumatic motor provides less satisfactory results in terms of smooth rotation of the driving jaw, and thus flipping over of the sample container.

According to still another preferred feature of the present invention, said gear transmission is accommodated inside a gear case which fits with the rest of said driving gripping head adjacent said driving jaw, and comprises:
- a driving rack which is translationally coupled to said driving shaft adjacent said driving jaw and which is thus designed to reciprocate via said driving shaft, and
- a driven pinion meshing with said rack and arranged about a driven shaft which is centered on said transverse axis and upon which is rotationally mounted said driving jaw.

Still more preferably, said driven pinion may be a shaft pinion which is formed integral with said driven shaft.

According to a further feature of the present invention, said rack may advantageously be able to reciprocate by means of a male driving screw which is rotatively driven by said motor and which cooperates with a female nut member, this nut member being driven only in translation by said driving screw via a lock pin arranged to move to and fro in a longitudinally elongated guide provided along said nut member.

One should note that this gear transmission mechanism including a rack which is preferably used for the control means of the driving gripping head is of a simple structure and, as a consequence, minimizes the risks of icing or seizing of these control means due to their alternately operating in contact with liquid nitrogen and ambient temperature.

Moreover, this gear transmission mechanism being totally integrated in this driving gripping head, it almost provides no passage for humidity.

According to a still preferred embodiment of the present invention, the inventive gripping device may be provided with a robotic arm which is able to control the movement of said end-effector so as to continuously counterbalance the overturning of the container, so that the vertical longitudinal median plane of the latter remains substantially vertical from said storing position to said flipped over position.

Advantageously, said driven shaft, said pinion and said rack are made of a first metallic material such as a copper-beryllium alloy, said gripping jaws and said nut member are made of a second metallic material such as bronze, and said gear case is made of a third metallic material such as stainless steel.

Specifically, the choice of different materials for the moving parts of the gear transmission appears to be of high importance, in order to obtain a smooth rotation of the pinion as the result of the to and fro movement of the rack. It will nevertheless be noted that other metallic materials than those recited hereabove could be used.

Also advantageously, said gear transmission is designed with a total mechanical play which is greater than 0.1 mm and preferably of between 0.2 mm and 0.3 mm, so that it may offset the differential dilatation generated by a large range of temperatures at the end of said driving gripping head adjacent said container and thus allow a smooth rotation of said driving jaw within this range.

One will note that this total cumulated play of more than 0.1 mm for the gear transmission is necessary for satisfactorily performing the overturning and transfer of the sample container, taking into account the large range of operating temperatures - typically from 77 K (-195°C, due to the contact with liquid nitrogen) to possibly 313 K (+40° C, due to heating means such as a hot gas that can be used to warm up the gripping device, as detailed hereunder) which characterize this transfer.

Even more advantageously, said total play may be shared out by a play between said rack and said pinion of about 0.1 mm, a play between said rack and said gear case of about 0.1 mm, and/or a play between said driven shaft and said gear case of about 0.04 mm.

It should be noted that these values of plays used in the gear transmission of the driving gripping head are unusually large in order to prevent any possible blockage due to differential dilatation in the end of this gripping head adjacent the rotating jaw.

According to still another preferred feature of the present invention, said stabilization means of said idler jaw may comprise a device, such as a magnet, which may stabilize this free jaw at specific angular position of its rotation movement (e.g. 0 and 180 degrees), said idler jaw being mounted on the corresponding idler gripping head preferably by a thrust ball bearing.

According to a preferred embodiment of the invention, said driving gripping head may be provided with heating means suitable to avoid an icing or seizing of said control means in view of their alternately operating in contact with liquid nitrogen and ambient temperature. These heating means may advantageously comprise a built-in electric resistance heated by a low tension current and/or a gaseous nitrogen flow longitudinally running inside said driving gripping head.

Preferably, said driving gripping head comprises a casing which is made, in a median part thereof in the longitudinal direction, of an electrical and thermal insulating material, such as a plastic resin, in order to avoid a deterioration of said control means by possible leak currents from said heating means and/or by cooling below their minimum acceptable temperatures.

According to another aspect of the invention, the aforementioned inventive gripping device may advantageously be used for automatically and cryogenically transferring a sample container containing a crystal in liquid nitrogen, such as a protein crystal, and for submitting this crystal to X-ray beams in a diffractometer for X-ray crystallography measurements.

The above-mentioned characteristics of the present invention, along with others, will be understood more clearly on reading the following description of several examples of the invention, which are given for illustrative purposes and are not intended to limit the invention, said description referring to the attached drawings, wherein:
figure 1 is a diagrammatic partial elevation view of the robotic end-effector of a gripping device according to the invention, showing in transparency the inner structure of a driving gripping head ending with a driving jaw which grips a sample container via another idler jaw in an initial position of the container, and also showing in a symbolic way heating means incorporated into this gripping head,
figure 2 is a diagrammatic partial elevation view of the robotic end-effector of figure 1, showing the inside of the driving gripping head and the driving jaw in a flipped over gripping position of the container relative to that of figure 1,
figure 3 is a detail partial elevation view of the respective free ends of both gripping heads and of corresponding idler and driving jaws of the robotic end-effector of figures 1 and 2, particularly showing in transparency the gear transmission used in the driving gripping head,
figure 4 is an exploded diagrammatic perspective view of the driving gripping head of the invention, particularly showing the gear transmission elements of figure 3 and the associated gear case, and
figure 5 is a semi-exploded diagrammatic perspective view of the driving gripping head of figure 4 showing the assembled structure of these gear transmission elements.

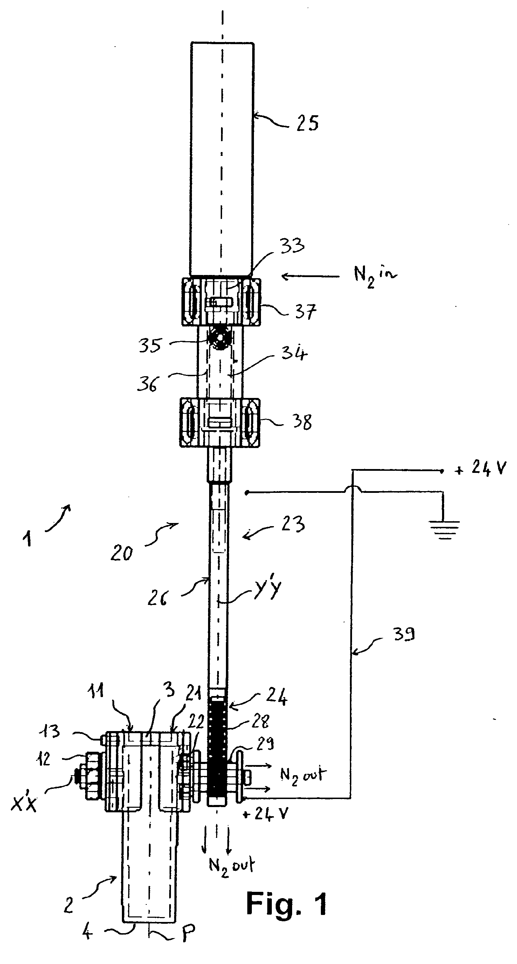

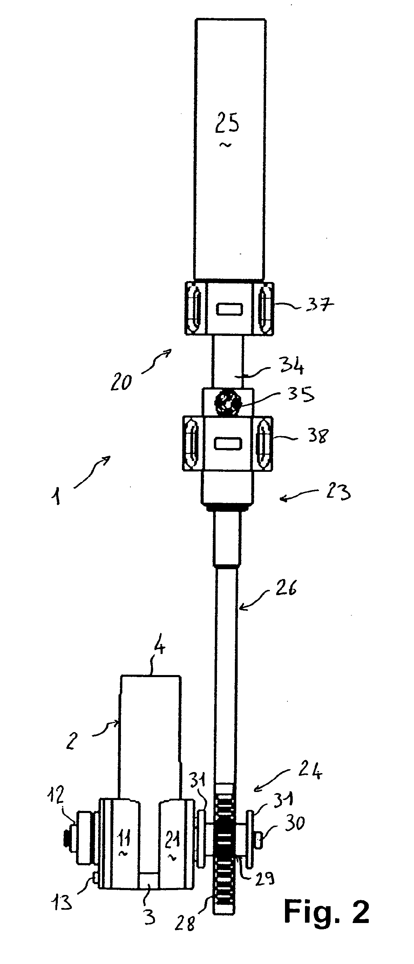

The gripping and transferring device according to an embodiment of the invention which is partially illustrated in figures 1 and 2 comprises a robotic end-effector 1 which is designed to efficiently grip and cryogenically transfer a sample container 2 preferably made of a vial containing a macromolecule crystal from a storing location, such as a Dewar vessel, to an analysis location, such as an X-ray diffractometer. The vial 2 contains liquid nitrogen and is provided with an inner magnetic holder comprising an upper metallic closing cap 3, in which a vertical pin is inserted and ends with a loop supporting the crystal sample near the bottom 4 of the vial 2 (the pin, loop and sample are well-known in the art and not shown for the sake of clarity).

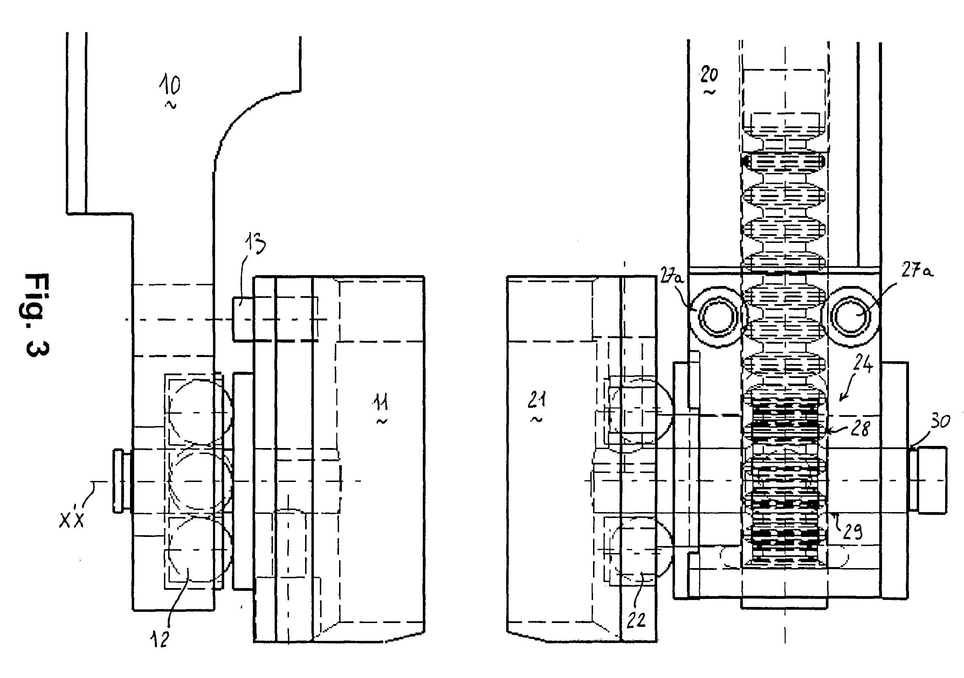

The end-effector 1 has two longitudinal and substantially parallel gripping heads 10 and 20 ending with two respective idler and rotationally driving jaws 11 and 21 via thrust ball bearings 12 and 22 (see figure 3, where the gripping head 10 ending with the idler jaw 11 is partly visible). These jaws 11 and 21 are designed to grip a first end of the vial 2, adjacent and immediately below the cap 3, with a clamping force along a transverse axis X'X substantially perpendicular to the longitudinal axis Y'Y of each gripping head 10, 20. The driving gripping head 20 which ends with the driving jaw 21 for rotating the vial 2 is such that this jaw 21 is rotatably mounted about the axis X'X under the control of means 23, which are accommodated inside the gripping head 20 and are arranged to reversibly bring the jaw 21 into a plurality of angular positions during its rotation, whereas the idler or free jaw 11 is provided with magnet stabilization means 13 for maintaining it at predetermined angular positions - e.g. 0 and 180 degrees - when not gripping the vial 2.

As visible in figures 1 and 2 and more precisely in figure 3, the control means 23 preferably comprise a gear transmission 24 which is driven by an electric motor 25 fed with continuous current (preferably 24 V at 1000 rpm) and equipped with a reductor (also preferably a 1/43 reductor), via a reciprocating longitudinal driving shaft 26 extending inside and along the gripping head 20, so as to bring the jaw 21 into discrete angular positions in a stepwise movement.

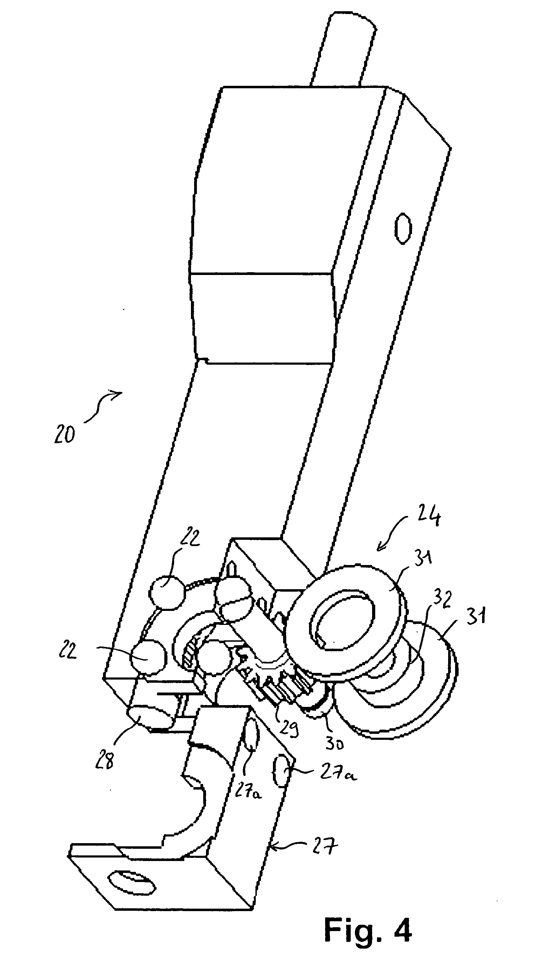

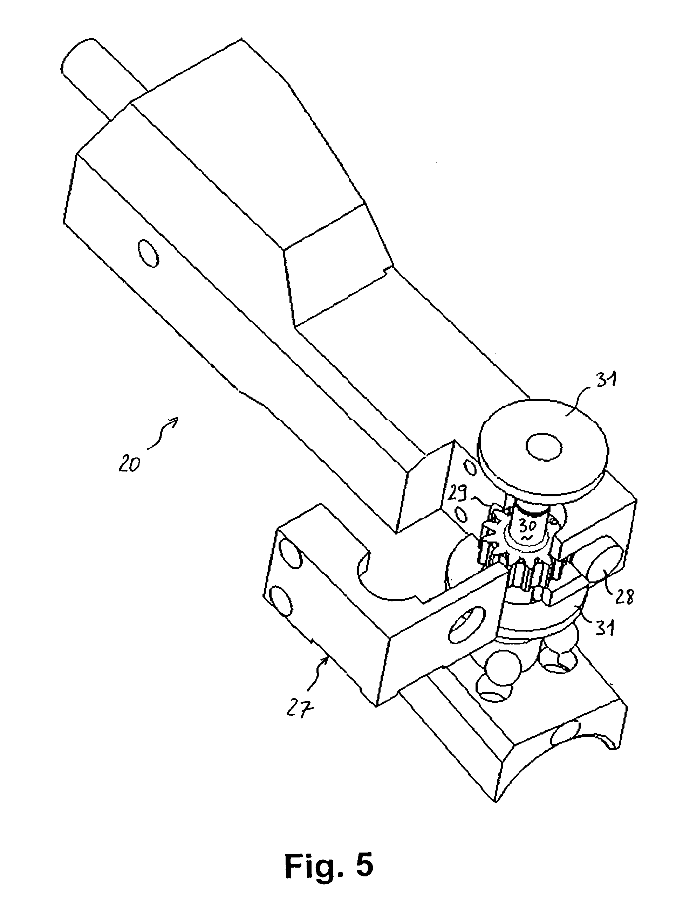

More precisely and as shown in figures 4 and 5, the gear transmission 24 is accommodated inside a gear case 27 which fits with the rest of the gripping head 20 via fixing means 27a, and comprises:
- a driving rack 28 which is translationally coupled to the driving shaft 26 and which is thus designed to reciprocate via the latter, and
- a driven shaft pinion 29 meshing with the rack 28 and arranged about a driven shaft 30 which is centered on the transverse axis X'X and upon which is rotationally mounted the jaw 21 (two end plates 31 equipped with sealing rings 32 surround the shaft 30 on both sides of the pinion 29).

This pinion 29 may for instance exhibit a primitive diameter of 6.5 mm, and the module of this pinion 29 and of the rack 28 may then be of 0.5 mm.

As visible in figures 1 and 2, the rack 28 is able to reciprocate along the Y'Y direction by means of an upper male driving screw 33 which is rotatively driven by the motor 25 and which cooperates with an adjacent lower female nut member 34, this nut member 34 being driven only in translation by the driving screw 33 via a lock pin 35 arranged to move to and fro in a longitudinally elongated guide 36 provided along the nut member 34. Further, two needle type guides 37 and 38 are respectively provided above and below this male driving screw 33 and female nut member 34.

This lock pin 35 extends perpendicularly to the plane containing both transverse and longitudinal axis X'X and Y'Y, and occupies, in figure 1, an upper position at the top of the guide 36 which corresponds to an upper translation position of the rack 28 and thus to the initial gripping position of the vial 2 with its cap 3 facing upwards and the sample downwards, and, in figure 2, a lower position at the bottom of the guide 36 which corresponds to a lower translation position of the rack 28 and thus to the flipped over gripping position of the vial 2 with its cap 3 facing downwards and the sample upwards.

Moreover, the gripping device according to the invention is provided with a robotic arm (not shown) which is able to control the movement of the end-effector 1 thanks to an appropriate kinematic diagram, so as to continuously counterbalance the overturning of the vial 2, so that the vertical longitudinal median plane P of the latter remains substantially vertical during its overturning by the jaws 11 and 21.

The gripping head 20 is preferably provided with heating means suitable to avoid an icing of the control means 23, which may comprise:
- an electric resistance wire heated by a low tension current (symbolized by reference 39 in figure 1), by bringing a current at both ends of the gripping head 20 and by an electric ground at about 2/3 of the grip, to avoid the icing of the thinner parts of the head 20 which would block it, thanks to a higher current density in these parts; and
- a dry gaseous nitrogen flow which longitudinally runs inside the driving gripping head 20 (see arrows "N₂ in" at figure 1) and which escapes at the end of this gripping head 20 adjacent the jaw 21 (see arrows "N₂ out" in figure 1).

The casing of the gripping head 20 preferably comprises, in a median part thereof in the longitudinal direction, a body (not shown) made of an electrical and thermal insulating material such as a plastic resin, so as to avoid a deterioration of the motor 25 by possible leak currents from the heating means 39 and/or by cooling below their minimum acceptable temperatures.

The driven shaft pinion 29 and the rack 28 are preferably made of a copper-beryllium alloy, the jaws 11 and 21 and the nut member 34 being preferably made of bronze, and the male driving screw 33, the gear case 27 and the rest of the body of the gripping head 20 being preferably of stainless steel (e.g. of reference Z7CN16), although other metallic materials could be used. It is to be noted that the choice of different materials for the moving parts of the gear transmission 24 allows to obtain a smooth rotation of the pinion 29 as the result of the to and fro movement of the rack 28.

The gear transmission 24 is designed with a cumulated mechanical play of for instance 0.24 mm, so as to offset the differential dilatation generated by the large range of operating temperatures at the end of the gripping head 20 adjacent the vial 2 and thus allow a smooth rotation of the jaw 21 within this range which may be for example of from -195°C (due to the contact with liquid nitrogen) to possibly +40°C (due to external heating means such as a hot gas).

This total play may be shared out by a backlash between the rack 28 and the pinion 29 of about 0.1 mm, a play between the rack 28 and the gear case 27 of about 0.1 mm and a play between the driven shaft 30 and the gear case 27 of about 0.04 mm. These values of plays are unusually large in order to prevent any blockage due to said differential dilatation, and the exemplary cumulated play of 0.24 mm may lead to a discrepancy in the rotation of the sample container of about 4°, which is compensated by an appropriate mechanical stop.

### Bibliography:

- Abola, E., Kuhn, P., Earnest, T., & Stevens, R.. Automation of X-ray crystallography. Nature Structural Biology, 2000;7:973-7.
- Cipriani F, Felisaz F, Launer L, Aksoy JS, Caserotto H, Cusack S, Dallery M, di-Chiaro F, Guijarro M, Huet J, Larsen S, Lentini M, McCarthy J, McSweeney S, Ravelli R, Renier M, Taffut C, Thompson A, Leonard GA, Walsh MA. Automation of sample mounting for macromolecular crystallography. Acta Crystallogr D Biol Crystallogr., 2006;62(Pt 10):1251-9.
- Ohana J, Jacquamet L, Joly J, Bertoni A, Taunier P, Michel L, Charrault P, Pirocchi M, Carpentier P, Borel F, Kahn R, Ferrer J-L : CATS: a Cryogenic Automated Transfer System installed on the beamline FIP at ESRF. J Appl Cryst 2004, 37:72-77.
- Sharff, A. High throughput crystallography on an in-house source, using actor. The Rigaku Journal, 2003;19(2): 5-10.

## Claims

1. Method for automatically transferring from a storing location to an analysis location a sample container (2), such as a vial for a crystal to be cryogenically transferred for analysis by X-rays, the container having first and second opposite ends (3 and 4) and containing the sample adjacent said second end, the method comprising:
- gripping in said storing location the container at said first end (3) thereof, the container then occupying a storing position, and
- bringing the container to a substantially flipped over position compared to said initial position which is suitable for subsequently positioning the container onto said analysis location,
**characterized in that** the method comprises reversibly overturning the container while continuously gripping said first end thereof during its transfer between said storing and flipped over positions, and *vice versa.*

2. Method according to claim 1, wherein the container (2) is overturned by both clamping and turning forces which are exerted at said very first end (3).

3. Method according to claim 1 or 2, wherein the container (2) describes a plurality of discrete angular positions during its overturning about said first end (3), with an angle of substantially 180° between said storing and flipped over positions.

4. Method according to any of the preceding claims, the container (2) being a vial having a longitudinal median plane (P), wherein the method comprises keeping said plane parallel to itself from said storing position to said flipped over position, said first and second ends (3 and 4) respectively being top and bottom ends of the container in said storing position.

5. Method according to claim 4, wherein it comprises automatically and continuously counterbalancing said overturning of the container (2), so that said longitudinal median plane (P) of the latter remains substantially vertical from said storing position to said flipped over position.

6. Method according to claim 4 or 5, wherein the container (2) is of magnetic holder type, containing liquid nitrogen and comprising at said first end a metallic cap (3) in which a longitudinal pin is inserted, said pin having a tip to which a loop supporting said sample is adhered adjacent said second end (4), the container being gripped immediately below said cap from said storing position to said flipped over position.

7. Method according to claim 6, wherein said storing location is a Dewar vessel containing liquid nitrogen, and said analysis location is a diffractometer with a sample location therein which is bathed in a flow of nitrogen gas at a temperature of about 100 K.

8. Method according to any of the preceding claims, wherein said sample is a macromolecule crystal, such as a protein crystal, which is transferred at a temperature less than or equal to 130 K, and preferably below 100 K.

9. Gripping and transferring device for implementing a method according to any of the preceding claims, the device comprising a robotic end-effector (1) having two longitudinal and substantially parallel gripping heads (10 and 20) ending with two respective gripping jaws (11 and 21), which are designed to grip said first end (3) of the container (2) with a clamping force along a transverse axis (X'X) substantially perpendicular to said gripping heads, **characterized in that** one of said gripping jaws is a rotationally driving jaw (21) for the container and is rotatably mounted about said axis under the control of control means (23), which are accommodated inside the corresponding driving gripping head (20) and which are arranged to reversibly bring said driving jaw into a plurality of angular positions during its rotation, the other gripping jaw being an idler jaw (11) which is provided with stabilization means (13) for maintaining the idler jaw at predetermined angular positions when not gripping the container.

10. Gripping device according to claim 9, wherein said control means (23) comprise a gear transmission (24) which is driven by a motor (25) equipped with a reductor, via a reciprocating longitudinal driving shaft (26) extending inside and along said driving gripping head (20).

11. Gripping device according to claim 10, wherein said motor (25) is an electric motor which is preferably fed with continuous current.

12. Gripping device according to claim 10 or 11, wherein said gear transmission (24) is accommodated inside a gear case (27) which fits with the rest of said driving gripping head (20) adjacent said driving jaw (21), and comprises:
- a driving rack (28) which is translationally coupled to said driving shaft (26) adjacent said driving jaw and which is thus designed to reciprocate via said driving shaft, and
- a driven pinion (29) meshing with said rack and arranged about a driven shaft (30) which is centered on said transverse axis (X'X) and upon which is rotationally mounted said driving jaw.

13. Gripping device according to claim 12, wherein said driven pinion (29) is a shaft pinion which is formed integral with said driven shaft (30).

14. Gripping device according to claim 12 or 13, wherein said rack (28) is able to reciprocate by means of a male driving screw (33) which is rotatively driven by said motor (25) and which cooperates with a female nut member (34), this nut member being driven only in translation by said driving screw via a lock pin (35) arranged to move to and fro in a longitudinally elongated guide (36) provided along said nut member.

15. Gripping device according to any of claims 9 to 14, wherein it is provided with a robotic arm which is able to control the movement of said end-effector (1) so as to continuously counterbalance the overturning of the container (2), so that the vertical longitudinal median plane (P) of the latter remains substantially vertical from said storing position to said flipped over position.

16. Gripping device according to claim 14, wherein said driven shaft (30), said pinion (29) and said rack (28) are made of a first metallic material such as a copper-beryllium alloy, said gripping jaws (11 and 21) and said nut member (34) are made of a second metallic material such as bronze, and said gear case (27) is made of a third metallic material such as stainless steel.

17. Gripping device according to any of claims 10 to 16, wherein said gear transmission (24) is designed with a total mechanical play which is greater than 0.1 mm and preferably of between 0.2 mm and 0.3 mm, so that it may offset the differential dilatation generated by a large range of temperatures at the end of said driving gripping head (20) adjacent said container (2) and thus allow a smooth rotation of said driving jaw (21) within this range.

18. Gripping device according to any of claims 12 to 14 and to claim 17, wherein said total play includes at least one of the following components:
- a backlash between said rack (28) and said pinion (29) which is of about 0.1 mm,
- a play between said rack and said gear case (27) which is of about 0.1 mm, and/or
- a play between said driven shaft (30) and said gear case which is of about 0.04 mm.

19. Gripping device according to any of claims 9 to 18, wherein said stabilization means (13) of said idler jaw (11) comprise a magnet, said idler jaw being mounted on the corresponding idler gripping head (10) preferably by a thrust ball bearing (12).

20. Gripping device according to any of claims 9 to 19, wherein said driving gripping head (20) is provided with heating means suitable to avoid an icing of said control means (23), such as a built-in electric resistance (39) which is heated by a low tension current and/or a gaseous nitrogen flow (N₂ in, N₂ out) longitudinally running inside said driving gripping head.

21. Gripping device according to claim 20, wherein said driving gripping head (20) comprises a casing which is made, in a median part thereof in the longitudinal direction, of an electrical and thermal insulating material, such as a plastic resin material, so as to avoid a deterioration of said control means (23) by possible leak currents from said heating means (39) and/or by cooling below their minimum acceptable temperatures.

22. Use of a gripping device according to any of claims 9 to 21 for automatically and cryogenically transferring a sample container (2) containing a crystal in liquid nitrogen, such as a protein crystal, and for submitting this crystal to X-ray beams in a diffractometer for X-ray crystallography measurements.
